# EUROPÄISCHE PATENTSCHRIFT

(11) **EP 3 643 429 B1**
(45) Veröffentlichungstag und Bekanntmachung des Hinweises auf die Patenterteilung: **13.01.2021**
(21) Anmeldenummer: 18201926.5
(22) Anmeldetag: 23.10.2018
(51) Int. Cl.: B22F 1/00, B22F 3/105, B22F 9/04, C22C 1/04, C22C 27/04, B33Y 70/00, C23C 4/06, C23C 4/08, C23C 4/134

(54) **HERSTELLUNGSVERFAHREN UND VERWENDUNG FÜR EIN WOLFRAMLEGIERUNGSPRODUKT**
METHOD OF PREPARATION AND USE FOR A TUNGSTEN ALLOY PRODUCT
PROCÉDÉ DE FABRICATION ET D'UTILISATION D'UN PRODUIT D'ALLIAGE DE TUNGSTÈNE

(43) Veröffentlichungstag der Anmeldung: 29.04.2020
(73) Patentinhaber: Bayerische Metallwerke GmbH, 85221 Dachau (DE)
(72) Erfinder: Gobran, Hany, 85757 Karlsfeld (DE)
(74) Vertreter: Roos, Peter

(56) Entgegenhaltungen:
- EP-A2- 0 098 944
- WO-A1-2015/175726
- GB-A- 746 212
- JP-A- H02 122 048
- US-A- 3 888 636

## Beschreibung

Die vorliegende Erfindung betrifft ein Herstellungsverfahren für ein Wolframlegierungsprodukt, sowie eine Verwendung für ein Wolframlegierungsprodukt.

Insbesondere für die Herstellung von thermisch hoch belasteten Bauteilen werden oftmals Legierungen mit einem hohen Anteil an Wolfram eingesetzt. Der Vorteil von Wolfram besteht hierbei neben einer relativ hohen Festigkeit in einem extrem hohen Schmelzpunkt (3422 °C). Darüber hinaus besitzt Wolfram eine sehr große Dichte und eine hohe chemische Widerstandsfähigkeit (z. B. Korrosionsbeständigkeit), woraus sich weitere Anwendungsgebiete ergeben, in denen Wolframlegierungen sehr vorteilhaft eingesetzt werden können.

Aufgrund der relativ hohen Sprödigkeit von reinem Wolfram werden in vielen Anwendungsfällen neben dem Wolfram weitere Legierungskomponenten (Legierungszusätze) benötigt, um damit die Duktilität der Wolframlegierung zu vergrößern. In anderen Anwendungsgebieten kann mit entsprechenden Legierungszusätzen je nach Bedarf beispielsweise auch eine gewünschte thermische und/oder elektrische Leitfähigkeit der Wolframlegierung eingestellt werden.

Als derartige weitere Legierungskomponenten können insbesondere andere Metalle wie Molybdän, Eisen, Nickel, Kupfer, Silber und/oder Metalloxide wie z. B. Lanthanoxid, Thoriumoxid, Ceroxid, Yttriumoxid, Zirkonoxid, Terbiumoxid etc. eingesetzt werden.

Die Herstellung eines Bauteils aus einer Wolframlegierung erfolgt gemäß des Stands der Technik durch Pressen (Verdichten) und Sintern einer Pulvermischung bestehend aus Wolframpulver und typischerweise mehreren weiteren Pulvern (entsprechend der gewünschten weiteren Legierungskomponenten), um das Bauteil als ein Sinterbauteil zu erhalten.

Nachteiligerweise gestattet der Press- und Sinterprozess nur die Herstellung von Bauteilen mit relativ einfacher Geometrie. Die Herstellung von Bauteilen mit komplizierterer Geometrie erfordert eine aufwendige Nachbearbeitung des Sinterbauteils, z. B. durch Drehen, Fräsen, Bohren etc.

Da ein Einsatz von Wolfram mit relativ hohen Materialkosten verbunden ist, wird in vielen Anwendungsgebieten eine Wolframlegierung lediglich als eine oberflächliche Beschichtung eines Bauteils vorgesehen, das im übrigen aus einem kostengünstigeren Werkstoff (z. B. Stahl) gefertigt ist.

Beispiele hierfür sind mit Wolframkarbid beschichtete Werkzeuge oder z. B. durch thermisches Spritzen oder z. B. Auftragschweißen mit einer Wolframlegierung beschichtete Kokillen (z. B. zur Herstellung von Aluminiumfelgen oder Zylinderköpfen in der Automobilindustrie).

Bei einer derartigen Beschichtung mit einer Metalllegierung hat es sich in manchen Fällen jedoch als nachteilig herausgestellt, dass insbesondere Pulvermischungen bzw. Auftragsmaterialien mit hohem Wolframanteil (z. B. größer als 70 Gew-%) oftmals schwierig mit zufriedenstellender Beschichtungsqualität aufzutragen sind.

Es ist eine Aufgabe der vorliegenden Erfindung, einen neuartigen Weg für die Herstellung von Bauteilen aus Wolframlegierungen und die Ausbildung von Beschichtungen aus Wolframlegierungen aufzuzeigen.

Verwendet wird ein Wolframlegierungsprodukt, bestehend aus: 80 bis 98,5 Gew.-% Wolfram, 0,1 bis 15 Gew.-% Nickel, 0,1 bis 10 Gew.-% Eisen und/oder Kupfer, und optional einem oder mehreren weiteren Zusätzen oder Verunreinigungen von allenfalls 2 Gew.-%, in Form eines Pulvers aus Pulverkörnern, deren Korngrößen größtenteils (also bei mehr als 50 % der Pulverkörner) im Bereich von 10 bis 200 µm liegen, wobei die Pulverkörner größtenteils jeweils Wolfram, Nickel, und Eisen und/oder Kupfer enthalten Diese Legierung ist beispielsweise aus der EP 0 098 944 A2 bekannt.

Das Wolframlegierungsprodukt ist vereinfacht ausgedrückt ein Pulver aus Pulverkörnern mit mehr oder weniger einheitlicher Korngröße (größtenteils im angegebenen Bereich liegend), mit den weiteren Besonderheiten einer bestimmten "globalen Zusammensetzung" des Wolframlegierungsprodukts sowie einer mehr oder weniger einheitlichen und mehr oder weniger der globalen Zusammensetzung entsprechenden "mikroskopischen Zusammensetzung" der einzelnen Pulverkörner.

Eine erste bevorzugte Verwendung des hier beschriebenen Wolframlegierungsprodukts ist dessen Verwendung als Ausgangsmaterial in einem generativen Fertigungsverfahren, insbesondere einem selektiven Laserschmelzen (SLM), selektiven Lasersintern (SLS) oder einem Elektronenstrahlschmelzen (EBM bzw. SEBM). Derartige Verfahren werden nachfolgend (wie auch oftmals im Stand der Technik) auch als "3D-Drucken" bezeichnet. Eine andere bevorzugte Verwendung des hier beschriebenen Produkts ist dessen Verwendung als Ausgangsmaterial in einem Beschichtungsverfahren, insbesondere einem thermischen Spritzen.

In einer Ausführungsform ist vorgesehen, dass die Pulverkörner des Wolframlegierungsprodukts nicht nur größtenteils (d.h. mehr als 50 % der Pulverkörner) jeweils Wolfram, Nickel, und Eisen und/oder Kupfer enthalten, sondern sogar mehr als 70 % der Pulverkörner des Wolframlegierungsprodukts jeweils Wolfram, Nickel, und Eisen und/oder Kupfer enthalten.

In einer Ausführungsform ist vorgesehen, dass die Pulverkörner größtenteils (oder sogar zu mehr als 70 %) jeweils einen Anteil an Wolfram enthalten, der im Bereich des 0,5-fachen bis 2-fachen des Anteils an Wolfram im Wolframlegierungsprodukt liegt.

In einer Ausführungsform ist vorgesehen, dass die Pulverkörner größtenteils (oder sogar zu mehr als 70 %) jeweils einen Anteil an Wolfram enthalten, der im Bereich des 0,8-fachen bis 1,2-fachen des Anteils an Wolfram im Wolframlegierungsprodukt liegt.

In einer Ausführungsform ist vorgesehen, dass die Pulverkörner größtenteils (oder sogar zu mehr als 70 %) jeweils einen Anteil an Nickel enthalten, der im Bereich des 0,5-fachen bis 2-fachen des Anteils an Nickel im Wolframlegierungsprodukt liegt.

In einer Ausführungsform ist vorgesehen, dass die Pulverkörner größtenteils (oder sogar zu mehr als 70 %) jeweils einen Anteil an Eisen und/oder Kupfer enthalten, der im Bereich des 0,5-fachen bis 2-fachen des Anteils an Eisen und/oder Kupfer im Wolframlegierungsprodukt liegt.

In einer Ausführungsform ist vorgesehen, dass der Anteil an Wolfram im Wolframlegierungsprodukt im Bereich von 90 bis 98,5 Gew.-% liegt. Diese Ausführungsform ist insbesondere für die Verwendung des Produkts als Ausgangsmaterial in einem 3D-Drucken besonders vorteilhaft. Darüber hinaus ist ein derartiges Produkt jedoch auch als Ausgangsmaterial in einem Beschichtungsverfahren geeignet.

In einer Ausführungsform ist vorgesehen, dass der Anteil an Wolfram im Wolframlegierungsprodukt im Bereich von 80 bis 90 Gew.-% liegt. Diese Ausführungsform ist insbesondere für eine Verwendung des Produkts als Ausgangsmaterial in einem Beschichtungsverfahren besonders vorteilhaft.

In einer Ausführungsform ist vorgesehen, dass die Korngrößen der Pulverkörner größtenteils (oder sogar zu mehr als 70 %) im Bereich von 10 bis 100 µm, insbesondere im Bereich von 10 bis 50 µm, liegen. Diese Ausführungsform ist insbesondere für die Verwendung des Produkts beim 3D-Drucken besonders vorteilhaft.

Gemäß der vorliegenden Erfindung wird die eingangs gestellte Aufgabe gelöst durch ein Verfahren zur Herstellung eines Wolframlegierungsprodukts, umfassend die Schritte:
- Bereitstellen einer Pulvermischung, bestehend aus:
   80 bis 98,5 Gew.-% Wolfram,
   0,1 bis 15 Gew.-% Nickel,
   0,1 bis 10 Gew.-% Eisen und/oder Kupfer,
   optional einem oder mehreren weiteren Zusätzen oder Verunreinigungen von allenfalls 2 Gew.-% durch Vermischen eines Wolframpulvers, eines Nickelpulvers sowie eines Eisenpulvers und/oder eines Kupferpulvers, und gegebenenfalls eines oder mehrerer Pulver von einem bzw. mehreren Zusätzen,
- Pressen und Sintern der Pulvermischung, um wenigstens einen gesinterten Legierungsblock zu erhalten,
- Zerkleinern des wenigstens einen gesinterten Legierungsblockes durch Brechen und/oder ein spanabhebendes Verfahren, um Legierungspartikel zu erhalten,
- Zerkleinern der Legierungspartikel durch Mahlen, um ein Pulver aus Pulverkörnern zu erhalten, deren Korngrößen größtenteils (oder sogar zu mehr als 70 %) jeweils im Bereich von 10 bis 200 µm liegen,
- optional Sieben der Pulverkörner, um eine Fraktion der Pulverkörner mit Korngrößen im Bereich von 10 bis 100 µm zu erhalten,
- optional thermische Behandlung, insbesondere Plasmabehandlung, der Pulverkörner, um durch wenigstens teilweises Aufschmelzen der Pulverkörner eine Abrundung der Oberfläche der Pulverkörner zu bewirken.

Ein gemäß der vorstehenden weiteren Aspekte der Erfindung spezifiziertes bzw. hergestelltes Wolframlegierungsprodukt kann gleichermaßen sehr vorteilhaft als Ausgangsmaterial für ein 3D-Drucken oder als Ausgangsmaterial in einem Beschichtungsverfahren verwendet werden.

Ein im Rahmen der vorliegenden Erfindung vorgesehenes "Bereitstellen einer Pulvermischung" erfolgt bevorzugt durch Vermischen eines Wolframpulvers, eines Nickelpulvers sowie eines Eisenpulvers und/oder eines Kupferpulvers (und optional eines oder mehrerer Pulver von einem bzw. mehreren Zusätzen), wobei das Wolframpulver bevorzugt aus Pulverkörnern besteht, deren Korngrößen größtenteils (oder sogar zu mindestens 90 %) im Bereich von 10 bis 100 µm liegen. Insbesondere können diese Korngrößen auch größtenteils (oder sogar zu mindestens 90 %) im Bereich von 10 bis 50 µm liegen.

Die gleiche Spezifikation der Korngrößenverteilung, wie vorstehend für das Wolframpulver angegeben, kann alternativ oder zusätzlich auch für wenigstens eines, insbesondere sämtliche der weiteren Pulver (der weiteren Legierungskomponenten Nickel, Eisen und/oder Kupfer, optional ein oder mehrere Zusätze) vorgesehen sein.

Das "Pressen und Sintern" einer damit bereitgestellten Pulvermischung kann gemäß an sich bekannter Verfahren durchgeführt werden, etwa mittels einer Verdichtung in einer hydraulischen oder mechanischen Metallpulverpresse und eines nachfolgenden Flüssigphasensinterns bei hohen Temperaturen, um damit einen oder mehrere gesinterte Legierungsblöcke zu erhalten.

Das "Zerkleinern des wenigstens einen erhaltenen Legierungsblockes durch Brechen und/oder ein spanabhebendes Verfahren" (z. B. Drehen oder Fräsen) kann insbesondere derart ausgestaltet sein, dass damit Legierungspartikel wie z. B. Bruchstücke bzw. Späne erhalten werden, deren Maximalausdehnung (z. B. Länge von Spänen) oder durchschnittliche Maximalausdehnung maximal 6 cm, bevorzugt maximal 3 cm beträgt.

Das "Zerkleinern der Legierungspartikel durch Mahlen", um ein Pulver aus Pulverkörnern zu erhalten, deren Korngrößen größtenteils im Bereich von 10 bis 200 µm liegen, kann beispielsweise mehrstufig, d.h. unter aufeinanderfolgender Verwendung von mehreren verschiedenen Mahlvorrichtungen erfolgen. Für die konkrete Gestaltung der wenigstens einen hierfür verwendeten Mahlvorrichtung kann vorteilhaft auf diesbezüglichen Stand der Technik von Mühlen zurückgegriffen werden.

In einer bevorzugten Ausführungsform erfolgt das Mahlen unter Einsatz von wenigstens zwei verschiedenen Mahlvorrichtungen, wobei die Legierungspartikel zunächst durch eine erste dieser Mahlvorrichtungen grob zerkleinert (Grob-Mahlen) werden, und dann das so erhaltene Zwischenprodukt (oder alternativ eine durch einen (ein- oder mehrstufigen) Siebprozess daraus erhaltene Siebfraktion) in eine zweite der Mahlvorrichtungen zwecks weiterer Zerkleinerung (feineres Mahlen) der Partikel eingegeben wird.

Beispielsweise kann ein mehrstufiges Zerkleinern der Legierungspartikel durch Mahlen vorsehen, dass die Legierungspartikel zunächst (als einer ersten Stufe) einer sogenannten Trommelmühle zugeführt werden, aufweisend eine drehantreibbare Trommel zur Aufnahme des Mahlgutes (hier: Legierungspartikel). Die Trommel kann (optional) zusätzlich mit einem oder mehreren Mahlkörpern (z. B. Kugeln, Stangen etc., z. B. aus Stahl oder dergleichen) zur Modifikation und/oder Beschleunigung des Mahlprozesses beschickt werden.

Derartige Trommelmühlen sind aus dem Stand der Technik bekannt und besitzen typischerweise eine zylindrische Trommel, die während des Mahlprozesses um eine feststehende horizontale Drehachse rotiert. Durch das Umwälzen des aufgenommenen Mahlgutes (und gegebenenfalls der Mahlkörper) wird das Mahlgut durch Druck, Schlag und Scheren zerkleinert.

Eine Trommelmühle kann im Rahmen der Erfindung insbesondere dazu verwendet werden, die Legierungspartikel zu Körnern zu zermahlen, deren Korngrößen größtenteils im Bereich von 0,5 mm bis 6 mm liegen, insbesondere z. B. größtenteils im Bereich von 1 mm bis 5 mm liegen.

Eine weitere Zerkleinerung von beispielsweise wie vorstehend bereits grob zermahlenen Legierungspartikeln kann nachfolgend beispielsweise insbesondere unter Verwendung einer sogenannten Schwingmühle, z. B. Exzenterschwingmühle, erfolgen.

Eine Schwingmühle weist einen für den Mahlprozess in Schwingungen versetzbaren Mahlbehälter auf, um ein im Inneren des Mahlbehälters aufgenommenes Mahlgut durch Stoß- und Reibungsereignisse zu zerkleinern. Je nach Konstruktion und Betriebsweise der Schwingmühle kann durch die Schwingungen vorteilhaft auch eine mehr oder weniger starke Umwälzung des Mahlgutes und somit Durchmischung des Mahlgutes erzielt werden.

Im Rahmen der Erfindung kann eine Schwingmühle insbesondere vorteilhaft in einem mehrstufigen Zerkleinerungsprozess eingesetzt werden, um mittels der Schwingmühle ein Pulver aus Pulverkörnern zu erhalten, deren Korngrößen größtenteils (oder sogar zu mehr als 70 %) maximal 200 µm, insbesondere größtenteils (oder sogar zu mehr als 70 %) maximal 100 µm betragen.

In einer bevorzugten Ausführungsform ist vorgesehen, dass für das Zerkleinern der Legierungspartikel durch Mahlen wenigstens eine Mahlvorrichtung eingesetzt wird, insbesondere z. B. eine Trommelmühle und/oder eine Schwingmühle, wobei das Mahlen für eine Zeitdauer von mindestens 1 Stunde, insbesondere mindestens 12 Stunden durchgeführt wird. Andererseits ist es vorteilhaft, wenn diese Zeitdauer des Mahlens maximal 120 Stunden, insbesondere maximal 72 Stunden beträgt.

Nach dem Zerkleinern der Legierungspartikel durch Mahlen kann vorteilhaft noch ein Sieben der erhaltenen Pulverkörner erfolgen (einstufig oder mehrstufig), um als das Wolframlegierungsprodukt eine bestimmte Fraktion der Pulverkörner zu erhalten, z. B. eine Fraktion mit Korngrößen, die größtenteils (oder sogar zu mehr als 90 %) im Bereich von 10 bis 100 µm liegen.

Nach dem Zerkleinern der Legierungspartikel durch Mahlen bzw. nach dem Sieben der so erhaltenen Pulverkörner kann vorteilhaft noch eine thermische Behandlung der Pulverkörner erfolgen, um durch wenigstens teilweises Aufschmelzen der Pulverkörner eine Abrundung der Oberfläche der Pulverkörner zu bewirken. Damit wird den Oberflächen der Pulverkörner tendenziell eher eine Kugelform verliehen. Diese Ausführungsform ist insbesondere für die Verwendung des Wolframlegierungsprodukts als Ausgangsmaterial in einem 3D-Drucken besonders vorteilhaft.

Die thermische Behandlung sollte hierbei so erfolgen, dass die Pulverkörner zumindest an einem Teil ihrer Oberfläche eine Temperatur erreichen, die mindestens 1200 °C, insbesondere mindestens 1800 °C beträgt. Andererseits sollte diese Temperatur jedoch 3400 °C nicht übersteigen.

In einer bevorzugten Ausführungsform umfasst die thermische Behandlung ein Erzeugen eines Pulverstrahls, der durch eine Erwärmungszone verläuft, in der die Pulverkörner erwärmt werden, um die Abrundung der Oberfläche der Pulverkörner zu bewirken. Der Pulverstrahl kann z. B. allein durch die auf die Pulverkörner wirkende Gravitation erzeugt werden. Alternativ können die Pulverkörner hierfür in einem Gasstrahl angeordnet durch die Erwärmungszone "gestrahlt" werden.

In einer Ausführungsform umfasst die thermische Behandlung eine Bestrahlung der Pulverkörner mittels eines oder mehrerer Laser. Die vorerwähnte Erwärmungszone kann hierbei von einem Fokusbereich des oder der Laserstrahlen gebildet sein.

In einer bevorzugten Ausführungsform umfasst die thermische Behandlung eine Plasmabehandlung, bei der die Pulverkörner in einem Plasma erwärmt werden. Das Plasma kann insbesondere z. B. durch einen elektrischen Lichtbogen oder z. B. durch eine elektrische Gasentladung erzeugt werden (z. B. RF-Plasmaprozess). Der räumliche Bereich des Plasmas kann hierbei die vorerwähnte Erwärmungszone darstellen. Insbesondere kann die Plasmabehandlung die Erzeugung eines "Plasmastrahls" vorsehen, der (ähnlich wie beim einem thermischen Spritzen) sowohl die Wärmequelle zur thermischen Behandlung als auch das Mittel zur Erzeugung eines "Pulverstrahls" darstellt. Insofern kann bei dieser Form der Plasmabehandlung vorteilhaft z. B. auf den Stand der Technik betreffend "Thermisches Spritzen" zurückgegriffen werden, wobei im Unterschied zum thermischen Spritzen die erwärmten und somit teilweise erweichten oder geschmolzenen Pulverkörner nicht auf einer Oberfläche abgeschieden sondern wiederverfestigt werden (um weiterhin einzelne, nicht miteinander verschmolzene Pulverkörner beizubehalten).

Bei einer Plasmabehandlung liegt eine maximale Plasmatemperatur bevorzugt im Bereich von 1500 °C bis 3400 °C, weiter bevorzugt im Bereich von 1500 °C bis 3000 °C.

In einer Ausführungsform umfasst das thermische Behandeln ein Mitführen der Pulverkörner in einem Verbrennungsgasstrahl (mit nachfolgender Wiederverfestigung). Auch in diesem Fall liegt eine maximale (Verbrennungsgas-)Temperatur bevorzugt im Bereich von 1500 °C bis 3400 °C, weiter bevorzugt im Bereich von 1500 °C bis 3000 °C.

Die Erfindung wird nachfolgend anhand eines Ausführungsbeispiels mit Bezug auf die beigefügten Zeichnungen weiter beschrieben. Es stellen dar:
- Fig. 1: ein Ablaufdiagramm eines Verfahrens zur Herstellung eines Wolframlegierungsprodukts,
- Fig. 2: eine REM-Aufnahme von Pulverkörnern des Wolframlegierungsprodukts,
- Fig. 3: ein Diagramm zur Veranschaulichung einer Korngrößenverteilung des Wolframlegierungsprodukts, und
- Fig. 4: drei Diagramme zur Veranschaulichung der Anteile von Legierungskomponenten in Pulverkörnern des Wolframlegierungsprodukts.

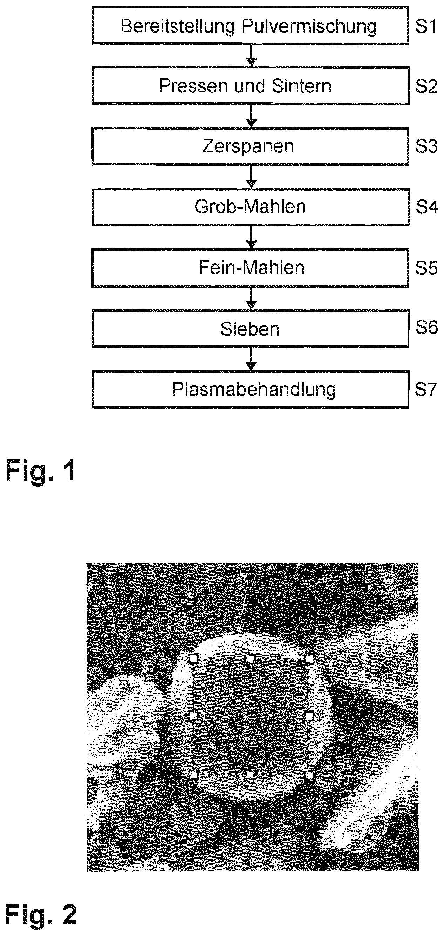

Fig. 1 zeigt ein Ablaufdiagramm eines Verfahrens zur Herstellung eines Wolframlegierungsprodukts gemäß eines Ausführungsbeispiels der Erfindung.

In einem Schritt S1 werden ein Wolframpulver (90 Gew.-%), ein Nickelpulver (5 Gew.-%) und ein Eisenpulver (5 Gew.-%) vermischt, um eine Pulvermischung bereitzustellen.

In einem Schritt S2 erfolgt ein Pressen und Sintern der Pulvermischung, um mehrere gesinterte Legierungsblöcke einer entsprechenden Wolfram-Nickel-Eisen-Legierung zu erhalten.

In einem Schritt S3 erfolgt ein Zerkleinern der einzelnen gesinterten Legierungsblöcke durch ein Zerspanen, um kleinere Legierungspartikel bzw. Bruchstücke in Form von etwa 5 mm langen Spänen zu erhalten.

In einem Schritt S4 erfolgt ein Zerkleinern der Späne durch Mahlen in einer Trommelmühle für etwa 50 Stunden, um ein Pulver aus Pulverkörnern zu erhalten, deren Korngrößen größtenteils im Bereich von 0,1 bis 1 mm liegen.

In einem Schritt S5 erfolgt ein weiteres Zerkleinern der so erhaltenen Pulverkörner (oder einer durch einen Siebprozess aus den so erhaltenen Pulverkörnern erhaltenen Siebfraktion) durch weiteres Mahlen in einer Schwingmühlefür etwa 12 Stunden, um ein Pulver aus Pulverkörnern zu erhalten, deren Korngrößen größtenteils im Bereich von 10 bis 150 µm liegen.

In einem Schritt S6 erfolgt ein Siebprozess, um eine Fraktion der Pulverkörner mit Korngrößen zu erhalten, die zu mehr als 90 % im Bereich von 50 bis 100 µm liegen.

In einem Schritt S7 erfolgt noch ein Plasmabehandlungsprozess, um die Pulverkörner der genannten Fraktion abzurunden, d. h. stärker in eine kugelförmige Form (Idealfall) zu bringen bzw. den Pulverkörnern eine tendenziell stärker einer Kugelform ähnelnde Form zu verleihen. Bei dieser thermischen Behandlung werden die Pulverkörner als ein Pulverstrahl durch ein etwa 2000°C bis 3000 °C heißes Plasma gestrahlt, so dass hierbei aus Nickel und aus Eisen und/oder Kupfer bestehende Oberflächenbereiche der Pulverkörner (zumindest kurzzeitig) aufgeschmolzen werden. Nach dem Wiedererstarren (nach Verlassen der durch das Plasma definierten Erwärmungszone) ist die Form der Pulverkörner besser abgerundet.

Fig. 2 zeigt eine Rasterelektronenmikroskop (REM)-Aufnahme von Pulverkörnern eines mit dem beschriebenen Herstellungsverfahren erhaltenen Wolframlegierungsprodukts. Mittels energiedispersiver Röntgenspektroskopie (EDX) wurde die Zusammensetzung einzelner Pulverkörner des Wolframlegierungsprodukts untersucht (vgl. in Fig. 2 markierten Bereich einer solchen REM-EDX-Untersuchung). Dabei hat sich herausgestellt, dass die Pulverkörner größtenteils jeweils Wolfram, Nickel und Eisen enthalten.

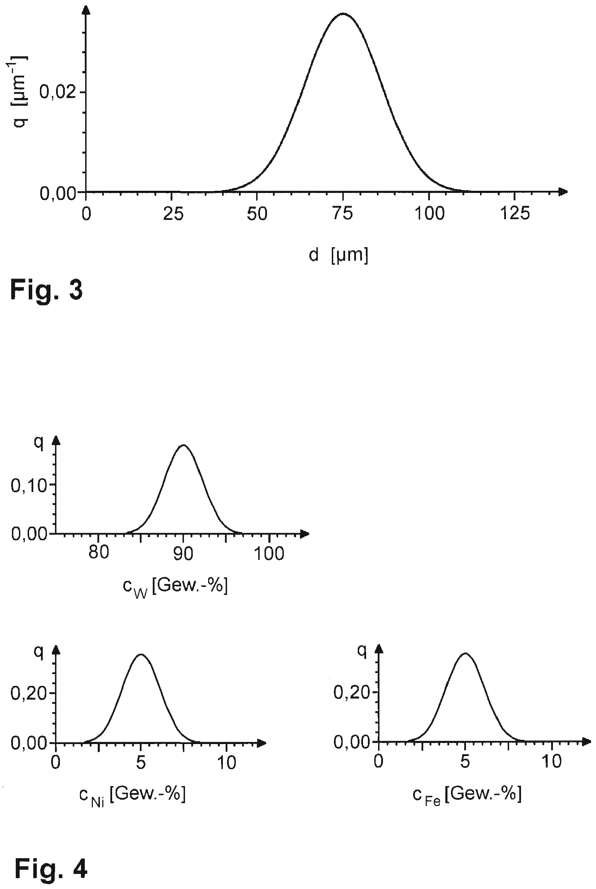

Fig. 3 veranschaulicht beispielhaft die Korngrößenverteilung des mit dem beschriebenen Herstellungsverfahren erhaltenen Wolframlegierungsprodukts. Im dargestellten Beispiel liegen die Korngrößen der Pulverkörner zu mehr als 90 % im Bereich von 50 bis 100 µm.

Fig. 4 zeigt drei Diagramme, in denen die Häufigkeitsverteilungen der Anteile an Wolfram, Nickel und Eisen in den einzelnen Pulverkörnern des Wolframlegierungsprodukts dargestellt sind. Eine Besonderheit des Produkts besteht wie dargestellt darin, dass die einzelnen "mikroskopischen Anteile" der Legierungskomponenten Wolfram, Nickel und Eisen, in Fig. 4 als c_{W}, c_{Ni} und c_{Fe} bezeichnet, jeweils einen Median bei demjenigen Anteil aufweisen, welcher dem entsprechenden Anteil (90 Gew.-% bzw. 5 Gew.-%) in der "globalen Zusammensetzung" (90:5:5) des Wolframlegierungsprodukts entspricht.

Das Wolframlegierungsprodukt gemäß des beschriebenen Beispiels eignet sich beispielsweise gut als Ausgangsmaterial für ein generatives Fertigungsverfahren ("3D-Drucken") wie z. B. selektives Laserschmelzen (SLM), selektives Lasersintern (SLS) oder Elektronenstrahlschmelzen (EBM bzw. SEBM). Darüber hinaus eignet es sich z. B. auch als Ausgangsmaterial in einem Beschichtungsverfahren wie z. B. thermischen Spritzen.

Es versteht sich, dass das beispielhaft beschriebene Herstellungsverfahren und somit auch das damit erhältliche Wolframlegierungsprodukt in vielfältiger Weise modifiziert werden können, etwa um eine Optimierung des Produkts an den konkreten Verwendungszweck vorzunehmen. Insbesondere kann abweichend vom beschriebenen Beispiel das Zerkleinern des wenigstens einen gesinterten Legierungsblocks auch in anderer Weise als durch Zerspanen realisiert sein. Dasselbe gilt für das Zerkleinern der Legierungspartikel durch das Mahlen, sei es durch Verwendung von andersartigen Mahlvorrichtungen oder durch Vorsehen anderer Betriebszeiten beim Einsatz der betreffenden Mühlen, z. B. der beschriebenen Trommel- und Schwingmühlen.

## Patentansprüche

1. Verfahren zur Herstellung eines Wolframlegierungsprodukts, umfassend die Schritte:
- Bereitstellen einer Pulvermischung (S1), bestehend aus:
80 bis 98,5 Gew.-% Wolfram,
0,1 bis 15 Gew.-% Nickel,
0,1 bis 10 Gew.-% Eisen und/oder Kupfer,
optional einem oder mehreren weiteren Zusätzen oder Verunreinigungen von allenfalls 2 Gew.-% **gekennzeichnet durch** Vermischen eines Wolframpulvers, eines Nickelpulvers sowie eines Eisenpulvers und/oder eines Kupferpulvers, und gegebenenfalls eines oder mehrerer Pulver von einem bzw. mehreren Zusätzen,
- Pressen und Sintern dieser durch das Vermischen bereitgestellten Pulvermischung (S2), um dadurch wenigstens einen gesinterten Legierungsblock zu erhalten,
- Zerkleinern des wenigstens einen gesinterten Legierungsblockes (S3) durch Brechen und/oder ein spanabhebendes Verfahren, um Legierungspartikel zu erhalten,
- Zerkleinern der Legierungspartikel durch Mahlen (S4, S5), um ein Pulver aus Pulverkörnern zu erhalten, deren Korngrößen größtenteils jeweils im Bereich von 10 bis 200 µm liegen,
- optional Sieben der Pulverkörner (S6), um eine Fraktion der Pulverkörner mit Korngrößen im Bereich von 10 bis 100 µm zu erhalten,
- optional thermische Behandlung, insbesondere Plasmabehandlung, der Pulverkörner, um durch wenigstens teilweises Aufschmelzen der Pulverkörner eine Abrundung der Oberfläche der Pulverkörner zu bewirken.

2. Verfahren nach Anspruch 1, wobei das Zerkleinern des wenigstens einen Legierungsblockes (S3) durch Drehen oder Fräsen erfolgt, insbesondere wobei damit die Legierungspartikel mit einer Maximalausdehnung von maximal 6 cm, bevorzugt maximal 3 cm erhalten werden.

3. Verfahren nach Anspruch 1 oder 2, wobei das Zerkleinern der Legierungspartikel durch Mahlen (S4, S5) mehrstufig unter aufeinanderfolgender Verwendung von mehreren verschiedenen Mahlvorrichtungen erfolgt.

4. Verfahren nach Anspruch 3, wobei für das mehrstufige Zerkleinern der Legierungspartikel durch Mahlen (S4, S5) zunächst eine Trommelmühle und nachfolgend eine Schwingmühle verwendet werden.

5. Verfahren nach einem der vorangehenden Ansprüche, wobei das Mahlen (S4, S5) zum Zerkleinern der Legierungspartikel für eine Zeitdauer durchgeführt wird, die mindestens 12 Stunden beträgt und/oder maximal 120 Stunden beträgt.

6. Verwendung eines Wolframlegierungsprodukts, das mittels eines Verfahrens nach einem der Ansprüche 1 bis 5 hergestellt wurde, als Ausgangsmaterial in einem generativen Fertigungsverfahren, insbesondere selektives Laserschmelzen, selektives Lasersintern oder Elektronenstrahlschmelzen.

7. Verwendung eines Wolframlegierungsprodukts, das mittels eines Verfahrens nach einem der Ansprüche 1 bis 5 hergestellt wurde, als Ausgangsmaterial in einem Beschichtungsverfahren, insbesondere thermisches Spritzen.

## Claims

1. Method for producing a tungsten alloy product, comprising the steps of:
- providing of a powder mixture (S1), consisting of:
80 to 98.5 wt.-% tungsten,
0.1 to 15 wt.-% nickel,
0.1 to 10 wt.-% iron and/or copper,
optionally one or more further additives or impurities of at most 2 wt.-%, **characterized by** mixing a tungsten powder, a nickel powder and an iron powder and/or a copper powder, and optionally one or more powders of one or more additives,
- pressing and sintering said powder mixture (S2) provided by the mixing in order to thereby obtain at least one sintered alloy block,
- comminuting the at least one sintered alloy block (S3) by breaking and/or a chip-removing process in order to obtain alloy particles,
- comminuting the alloy particles by grinding (S4, S5) in order to obtain a powder of powder grains, the grain sizes of which are mostly in the range from 10 to 200 µm,
- optional sieving of the powder grains (S6) in order to obtain a fraction of the powder grains with grain sizes in the range from 10 to 100 µm,
- optional thermal treatment, in particular plasma treatment, of the powder grains, in order to round off the surface of the powder grains by at least partial melting of the powder grains.

2. Method according to claim 1, wherein the comminution of the at least one alloy block (S3) takes place by turning or milling, in particular whereby the alloy particles are obtained with a maximum extension of 6 cm at most, preferably 3 cm at most.

3. Method according to claim 1 or 2, wherein the comminution of the alloy particles by grinding (S4, S5) takes place in multiple stages using several different grinding devices in succession.

4. Method according to claim 3, in which first a drum mill and then a vibrating mill are used for the multi-stage comminution of the alloy particles by grinding (S4, S5).

5. Method according to any of the preceding claims, wherein the grinding (S4, S5) for comminuting the alloy particles is carried out for a period of time which is at least 12 hours and/or a maximum of 120 hours.

6. Use of a tungsten alloy product which has been produced by means of a method according to any of claims 1 to 5 as a starting material in a generative manufacturing process, in particular selective laser melting, selective laser sintering or electron beam melting.

7. Use of a tungsten alloy product which has been produced by means of a method according to any of claims 1 to 5 as starting material in a coating method, in particular thermal spraying.

## Revendications

1. Procédé pour fabriquer un produit en alliage de tungstène comprenant les étapes suivantes :
- provision d'un mélange de poudre (S1), composé de :
80 à 98,5% en poids de tungstène,
0,1 à 15% en poids de nickel,
0,1 à 10% en poids de fer et/ou de cuivre,
éventuellement un ou plusieurs autres additifs ou impuretés de 2 % en poids au maximum, **caractérisé par** le mélanger d'une poudre de tungstène, d'une poudre de nickel et d'une poudre de fer et/ou d'une poudre de cuivre, et éventuellement d'une ou plusieurs poudres d'un ou plusieurs additifs,
- presser et fritter ce mélange de poudre (S2) fourni par le mélange pour obtenir au moins un bloc d'alliage fritté,
- fragmentation du au moins un bloc d'alliage fritté (S3) par cassage et/ou usinage pour obtenir des particules d'alliage,
- fragmentation des particules d'alliage par meulage (S4, S5) pour obtenir une poudre de grains de poudre dont les granulométries sont majoritairement comprises entre 10 et 200 µm,
- tamisage facultatif des grains de poudre (S6) pour obtenir une fraction des grains de poudre de granulométrie comprise entre 10 et 100 µm,
- traitement thermique facultatif, en particulier traitement plasma, des grains de poudre, afin d'arrondir la surface des grains de poudre par fusion au moins partielle des grains de poudre.

2. Procédé selon la revendication 1, dans lequel le au moins un bloc d'alliage (S3) est fragmenté par tournage ou fraisage, en particulier grâce auquel les particules d'alliage sont obtenues avec une dimension maximale de 6 cm au plus, de préférence de 3 cm au plus.

3. Procédé selon la revendication 1 ou 2, dans lequel le fragmentation des particules d'alliage par meulage (S4, S5) a lieu en plusieurs étapes en utilisant successivement plusieurs dispositifs de broyage différents.

4. Procédé selon la revendication 3, dans lequel on utilise d'abord un broyeur à tambour et ensuite un broyeur vibrant pour le broyage en plusieurs étapes des particules d'alliage par broyage (S4, S5).

5. Procédé selon l'une des revendications précédentes, dans lequel le meulage (S4, S5) pour broyer les particules d'alliage est effectué pendant une durée d'au moins 12 heures et/ou de 120 heures maximum.

6. Utilisation d'un produit en alliage de tungstène qui a été fabriqué au moyen d'un procédé selon l'une des revendications 1 à 5 comme matière de départ dans un procédé de fabrication génératif, en particulier fusion laser sélective, frittage laser sélectif ou fusion par faisceau d'électrons.

7. Utilisation d'un produit en alliage de tungstène qui a été fabriqué au moyen d'un procédé selon l'une des revendications 1 à 5 comme matière de départ dans un procédé de revêtement, en particulier la projection thermique.
